# EUROPEAN PATENT SPECIFICATION

(11) **EP 1 084 873 B1**
(45) Date of publication and mention of the grant of the patent: **25.09.2002**
(21) Application number: 99923604.5
(22) Date of filing: 07.06.1999
(51) Int. Cl.: B60G 17/052

(54) **METHOD FOR CONTROLLING A VEHICLE PNEUMATIC SUSPENSION AND RELATED LEVELLING MODULE**
METHODE ZUR REGELUNG EINER FAHRZEUGLUFTFEDERUNG UND ZUGEHÖRIGES HÖHENREGELUNGSMODUL
METHODE DE CONTROLE DE LA SUSPENSION PNEUMATIQUE DE VEHICULES ET MODULE DE MISE A NIVEAU CORRESPONDANT

(30) Priority: 08.06.1998 ES 9801195
(43) Date of publication of application: 21.03.2001
(73) Proprietor: Accesorios y Elevadores Valencia, S.L., 46138 Rafelbunol (ES)
(72) Inventor: MORENO IBANEZ, Alberto, E-46006 Valencia (ES)
(74) Representative: Sanz-Bermell Martinez, Alejandro
(86) International application number: ES9900167
(87) International publication number: WO99064261

(56) References cited:
- EP-A1- 0 761 483
- ES-T3- 2 036 764
- ES-T3- 2 082 866
- ES-T3- 2 085 338
- FR-A- 1 233 382
- FR-A1- 2 162 615
- FR-A1- 2 606 711
- US-A- 3 356 954
- US-A- 3 477 733

## Description

The technical sector involved in this patent is that of suspension control for vehicles of the type that are fitted with pneumatic suspension controlled by the pressure provided by a compressor which balances the pressure of the bellows or air-springs which constitute the support for each wheel mounted on these vehicles.

### Statement of the previous state of the art.

The technical sector involved in this patent is that of suspension control for vehicles of the type that are fitted with pneumatic suspension using air under pressure provided by the vehicle's compressor to adjust the pressure in the bellows which constitute the support for the platform of the vehicle on its wheel axles, depending on the different load values that may bear on said platform.

There have for a long time been companies on the market selling devices intended to jointly or separately perform the functions of keeping the height of the platform constant while the vehicle travels by means of a main levelling valve (A) and of limiting the maximum height of the platform in order to protect the different parts of the vehicle's suspension by means of a height-limiting valve (C).

There are several companies on the market such as Grau GmbH, Wabco, or Knorr Bremse, which sell devices intended for manual adjustment of the height of the platform, when the vehicle is at rest, in order to put this on a level with the loading bay, by means of a control here called a "manual lifting and lowering lever" (B).

Certain companies have recently appeared on the market, one of these being Grau GmbH, which market devices intended for carrying out both the function of manually adjusting the platform height when the vehicle is not moving, in order to put this on a level with the loading bay by means of a manual lifting and lowering lever control (Function B) and that of automatically returning the system to the function of travelling height adjustment (Function E). This occurs when the vehicle starts to move and the driver has forgotten to make this change back manually, as a safety device to protect the parts of the vehicle itself and everything around it on the road, by means of an electric valve which is governed by an electrical signal generated when a particular optional control parameter is activated, for example, the first operation of the brakes detected in the electrical circuit of the corresponding brake lights, or when a certain travelling speed is exceeded, taking the measurement of the speed from the vehicle's ABS system control module, etc.

From WO-A-91 06440 A is known a system for height controlling for air suspension vehicles, which groups and connects a set of independent valves, which are distributed in different parts of the vehicle, or grouped some of them in a single box, which carry out the operations defined as A), B), C) and E). This system has the peculiarity of specifically using a signal generated by the service brake operation to activate the function E) of automatically returning the system to the function of travelling height adjustment (Function A). Said signal can be of pneumatic nature, when it is generated in the pneumatic circuit of brake operation, or of electrical nature, when it is generated in the electrical circuit of the brake lights.

From US 5651555 a system with a levelling valve for operating with fluids is well known, as a system or device which contains in the same block two levelling valves and a selection valve for choosing one or the other of these, apart from a fast jettison valve which has to be pneumatically governed from some device outside the block. Both levelling valves are permanently and jointly driven by a single height-sensing arm, which means that the basic function of this device is that of determining two set levelling heights and being able to select one or the other of these. Nevertheless, this levelling valve system does not permit a height-variable adjustment, not allowing, for example, any accurate levelling in respect of a loading bay.

Another recent arrival on the market is a single company known as Wabco which markets a device intended for jointly carrying out all the functions described as A), B), C), and E), as well as a D) function, for auto-levelling at the loading bay. Nevertheless, although this device performs the same functions as the one put forward in the present invention, its operating concept and the technology on which it is based have nothing to do with the idea put forward here. The Wabco system is based on inputting data by means of high technology electric-electronic transducers, interpreting this data and the consequent activation orders by means of an electronic control system based on a processor, ending with a block of simple electric valves executing the orders. Unlike this one, the system proposed by the invention now being put forward is based on a complex interrelation of a number of clearly defined mechanical-pneumatic items.

We know of no company which develops a device or the possibility of grouping together several individual devices intended to jointly carry out the five functions described above without being based on an electronic control technology.

Said auto-levelling at the loading bay, function D), cames as a solution of a deficiency shown by all manual lifting and lowering lever present in the market, with exception of the sofisticated electronic system of the firm Wabco, because of the height initially adjusted for lewelling the platform respect to the loading bay is changing every times that the load changes, that occurs very often during the loading-unloading, so it forces to adjust the said height manually many times.

The proposed system main novelty is based on which the system can perform the Function D) of self-levelling in loading bay and not to be based on an electronic control technology, by means of a second levelling valve which can be temporarily connected to the same height sensor used by the main levelling valve (A), for correcting automatically the height deviations which during loading/unloading are produced with respect to the height manually fixed to level the platform with the loading bay.

The system involved in this invention consists of two blocks which have to be pneumatically connected together: a first block called here the "Levelling Module" and a second block here called the "Control Module". The system can thus carry out the five functions already described using a mechanical-pneumatic technology.

This invention deals with a method for controlling vehicles' pneumatic suspension, which performs each and all of the following functions:
A) Constant maintenance of the height of the platform whilst the vehicle is in movement, by means of a main levelling valve.
B) Manual adjustment of the platform height, when the vehicle is at rest, in order to put this on a level with the loading bay, by means of a manual lifting and lowering lever control.
C) Limitation of the maximum height to which the platform can be manually raised when function "B" is used, to protect the different parts of the vehicle's suspension, by means of a height-limiting valve; a valve which, supported by two non-return or check valves, also performs a sub-function of quickly emptying the air out of the suspension, necessary when very heavy goods are unloaded as units.
D) Constantly keeping any height value of the platform that has previously been selected with the manual lifting and lowering function (B) at a level with the loading bay, during the whole loading and unloading process, regardless of the vehicle's load situation, by means of a secondary levelling valve, supported by other specific mechanisms.
E) Automatic return of the system to function A) (travelling height) when the vehicle gets under way and the driver has forgotten to change this back manually, as a means of safeguarding the parts of the vehicle itself and everything around it on the road, by means of an electric valve which is governed by an electrical signal generated when a particular optional control parameter is activated (for example, first operation of the brakes, detected in the electrical circuit of the relevant lights, or when a particular movement speed is exceeded, taking the vehicle's ABS measurement etc.).

In order to make the explanation to follow clearer, six sheets of drawings are enclosed, representing the essence of this invention in seven figures.
Figure 1 shows a diagram of the installation of the system in a vehicle fitted with six bellows.
Figure 2 shows the full diagram of how the system operates.
Figure 3 shows an outside view of a material embodiment of the system's "Levelling Module".
Figure 4 shows a second outside view of the same embodiment of Figure 3.
Figure 5 shows a cross-section of the levelling module along the P-P' line shown in Figure 3.
Figure 6 shows a cross-section of the levelling module along the Q-Q' line shown in Figure 3.
Figure 7 shows a cross-section of the levelling module along the R-R' line shown in Figure 4.

In said figures the following numbers represent the items stated alongside:
- 1: brake cylinder
- 2: overflow valve
- 3: suspension cylinder
- 4: filter
- 5: right suspension line
- 6: left suspension line
- 7: right suspension bellow
- 8: left suspension bellow
- 9: wheel axle used as reference for levelling
all of these forming part of the basic installation of any vehicle fitted with pneumatic suspension.

The items referred to below form a specific part of the suspension control system for semi-trailers and the material embodiment of the levelling module involved in this description, with the following numbers:
- 10: the levelling module involved in this description
- 11: the main levelling valve
- 12: the height-sensing arm
- 13: the height-limiting valve
- 14: the air passage restrictor
- 15: the first positioning device (of the secondary levelling valve)
- 16: the clutch device (between the height-sensing arm and the secondary levelling valve)
- 17: the second positioning device (of the secondary levelling valve)
- 18: the secondary levelling valve
- 19: the valve for selecting between levellers
- 20: the control module
- 21: the function selection valve, with three positions: I, II and III
- 22: the mechanism for interlocking between the three different
- 23: the multi-function control
- 24: the raising and lowering function control valve
- 25: the valve for returning to position 1
- 26: the electrical connection for return signal to position I
- 30: the non-return or check valve for delivery or inlet
- 31: non-return valves for the fast jettison circuit
- 101: Module body
- 102: Adjustment nut I
- 103: Adjustment screw I
- 104: Positioner cover
- 105: Elastic ring
- 106: Piston stop
- 107: Free piston
- 108: "O" ring
- 109: "O" ring
- 110: Elastic ring
- 111: "O" ring
- 113: Elastic ring
- 114: Intermediate seal
- 115: Positioner
- 116: "O" ring
- 117: Lower seal
- 118: Elastic ring
- 119: "O" ring
- 120: "O" ring
- 121: Nut positions
- 122: Cut-off valve cover
- 123: "O" ring
- 124: Adjustment screw II
- 125: Spring guide
- 126: "O" ring
- 127: Spring
- 128: End joint bush
- 129: Valve joint
- 130: Joint separator
- 131: Cut-off valve slide
- 132: Cut-off valve pusher
- 133: Selection valve cover
- 134: "O" ring
- 135: Spring retention
- 136: Elastic ring
- 137: "O" seal
- 138: Elastic ring
- 139: Slide closure
- 140: Selection valve slide
- 141: Spring
- 142: Special separator
- 143: Selection separator
- 144: Distributor bush II
- 145: Spring
- 146: "O" ring
- 147: Distributor bush I
- 148: Distributor disk I
- 149: Distributor cover I
- 150: "O" ring
- 151: Plug with joint
- 152: Rotary joint
- 153: Main axle
- 154: Distributor disk II
- 155: Bearing
- 156: Rotary joint
- 157: Outer casing
- 158: Fixed clutch disk
- 159: Friction disk
- 160: "O" ring
- 161: Moving clutch disk
- 162: Sealing bush
- 163: Clutch piston
- 164: Elastic ring
- 165: Front cover
- 166: Bearing
- 167: Seal
- 168: Nut
- 169: Screw
- 170: Main rod
- 172: "O" ring
- 173: Clutch spring
- 174: Elastic ring
- 175: "O" ring
- 176: Key
- 177: Washer
- 178: Bearing
- 179: Support ring
- 180: Stud
- 181: Bearing
- 201: Levelling module support
- 202: Intermediate rod

We will now describe how this control system is connected up: the levelling module 10 has nine communication ports with the outside. Three of these ports, P1, P3 and P4 communicate with parts of the vehicle: P1 is the one for delivery from the suspension cylinder 3; P3 and P4 indicate the air outlets for respectively controlling the suspension lines 5, 6; one of the remaining ports P2 communicates with the outlet of air to atmospheric pressure.

The other five ports P5, P6, P7, P8 and P9 communicate directly with their equivalents on the control module 20.

The control module 20 has six ports for communication with the outside; five of these ports P5, P6, P7, P8 and P9 communicate directly with their equivalents in the levelling module 10. The other port P10 communicates with the atmospheric outlet.

### Explanation of one form of embodiment.

The levelling module 10 is fixed to the vehicle platform, approximately on the line of its longitudinal axis and over the wheel axle 9 which is intended for use for anchoring the system's height-sensing arm 12. Said sensor arm 12 is a moving part of the levelling module 10, and its movements are proportional to the variations in vertical height between the vehicle platform and its wheel axle 9, the same variation as the one between the platform and the ground, whilst the vehicle's wheels are on this.

The Control module 20 is preferentially fixed on one side of the back of the vehicle's platform, to give easy access for the driver to handle this near to the loading bay.

How the method operates.

### A) Levelling of the vehicle as this moves.

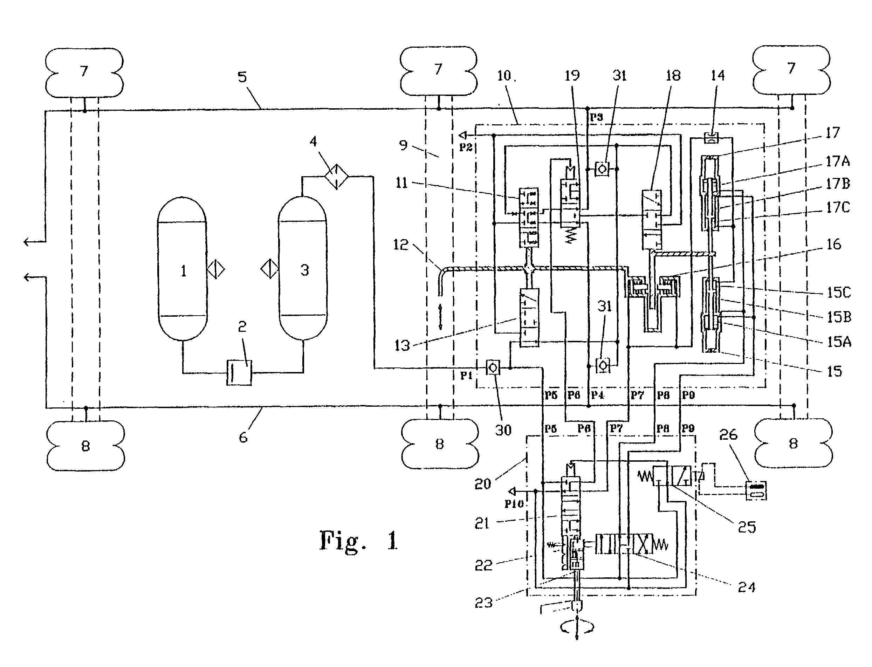

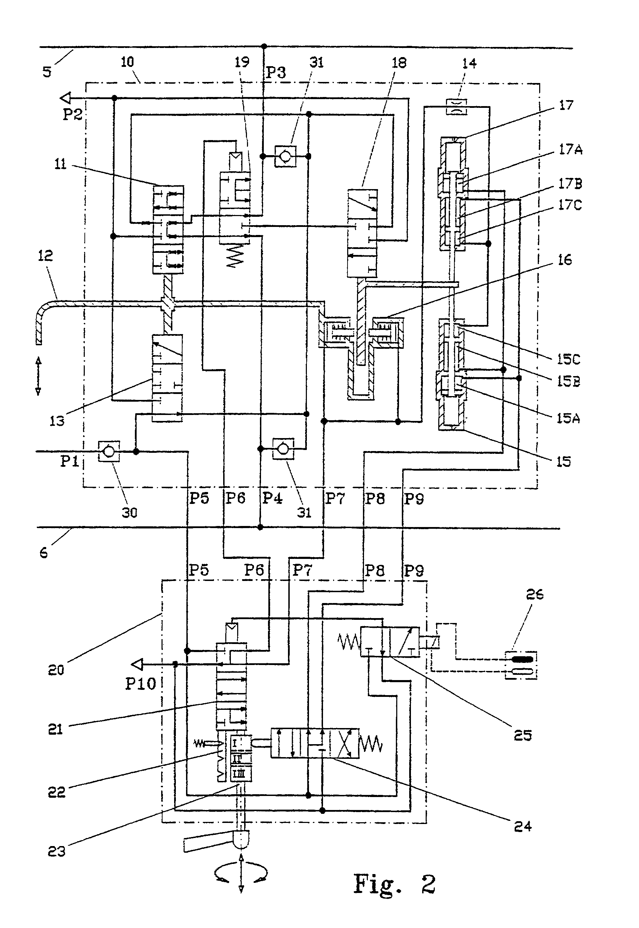

When the vehicle is built a travelling height is pre-set, corresponding to a particular securing position between the height-sensing arm 12 and the reference wheel axle 9, a point at which, according to Figures 1 and 2, the main levelling valve 11 is found in its neutral central position, that is, with all its passages closed; no air comes in nor goes out of the suspension lines 5, 6.

When the multi-function control 23 is in its position I, with the lever outwards, the vehicle levelling in movement function is activated. In this position, the function selection valve 21 keeps line P6, which governs the leveller selection valve 19, connected to the outlet, meaning that there is a connection between the two outlet lines to the main levelling valve 11 and the two outer lines of the pneumatic suspension 5, 6. As the load increases, the suspension bellows 7,8 are compressed by the increasing weight of the platform and the height between this and the ground drops. This makes the sensing arm 12 rise in respect of the levelling module itself 10, changing the position of the main levelling valve 11 to give way to the compressed air which comes from the delivery port P1 and crosses the valve for selecting between levellers 19, to enter the suspension lines 5, 6 increasing the pressure of the bellows 7, 8 and making the platform rise to its initial position, since at the same time the sensor arm 12 again moves the main levelling valve 11 to its neutral central position, at which time the entry of air to the suspension lines 5, 6 is stopped. If the load is reduced, the process that is started off is exactly as described above, the other way around; the platform height would initially increase, which would be compensated for by the main levelling valve 11 removing air from the suspension lines 5, 6 to reduce the pressure and make the platform drop back to its initial height.

### B) Manual raising and lowering function.

The vehicle is at rest with its rear facing the loading bay and the aim is to manually level the height of the vehicle's platform to match the height of the bay, in order to handle the goods. To do so, according to Figures 1 and 2, the driver must push the multi-function control 23 until this interlocks in position II, the only position in which the lever of said control can rotate around its own axle like a crank handle. The roller for contact with the multi-function control 23 has a cam profile section for the position II zone; rotating the multi-function control handle 23 causes the raising and lowering function control valve 24 to be activated, one way or the other from its central position. When the multi-function control 23 is in its position II, line P6, which governs the valve for selecting between levellers 19 is kept connected to the delivery line P5, which means that the suspension lines 5, 6 cease to be connected to the main levelling valve 11, in order to become connected with the secondary levelling valve 18. If the lever of the multifunction control 23 is now turned anti-clockwise, the raising and lowering function control valve 24 moves to the right as shown in Figures 1 and 2, so that port P8 is connected to delivery line P5 and port P9 is connected to outlet P10. Furthermore, in position II of the multi-function control 23 port P7 continues to be connected to outlet P10. As a result of this change of connections, we describe what occurs with the positioning devices 15 and 17 of the secondary levelling valve 18. Each positioning device has three activation chambers, connected with ports P7, P8 and P9 as shown in Figure 2. The intermediate chamber (17B) of the second positioning device 17 is connected to the outlet through port P9, so that said positioner is released to be able to rise without making any resistance. The lower chamber (15A) of the first positioning device 15 is connected to the outlet through port P9 and its intermediate chamber (15B) is connected to the delivery through port P8, meaning that said positioner moves upwards without encountering any resistance from the second positioning device 17. As a result of this, the secondary levelling valve 18 is forced to move upwards, changing position and establishing communication between the delivery air coming from P1, through the height-limiting valve 13, and the suspension lines 5, 6 through the valve for selecting between levels 19, raising the air pressure in the suspension bellows 7, 8 and making the platform rise. When the driver considers that the platform has reached the required height, he turns the multi-function control handle 23 to return this to its initial central position, so that the raising-lowering function control valve 24 returns to its neutral central position, with ports P8 and P9 thus being again simultaneously connected to delivery line P5, which makes the positioning devices 15 and 17 force the secondary levelling valve 18 back to its neutral central position, keeping the platform at the height selected as long as the multi-function control 23 is not further operated and the value of the load bearing on said platform is not altered.

If the handle of the multi-function control 23 had been turned clockwise from its neutral central position, the process would have been started the other way round, determining the manual lowering of the platform to the required height.

As soon as the vehicle is about to move again, the driver pulls the multi-function control 23 outwards to position I, in which the suspension lines 5, 6 lose their communication with the secondary levelling valve 18, to re-establish this with the main levelling valve 11, and put the platform back into the function of levelling the vehicle as it moves.

### C) Height-limiting function with sub-function of quickly emptying the air out of the suspension.

The height-limiting valve 13 is the mechanism meant for limiting the maximum height to which the platform can be manually raised when function "B" is used, preventing any damage that could be done to the parts of the vehicle's suspension if said height were exceeded.

When the multi-function control 23 is operated to make the platform rise manually, as explained in B) and shown in Figure 2, the secondary levelling valve 18 lets the air coming from delivery line P1 through, crossing the height-limiting valve 13 towards the suspension lines 5, 6. As the platform rises, the sensor arm 12 drops, to a pre-set point at which the position of the height-limiting valve 13 is forced to change position. In the first change of position the three conduits of said valve are blocked, cutting off the passage of air towards the suspension lines 5, 6 and detaining the platform elevation at the maximum pre-set height.

The height-limiting valve 13 and the two non-return valves 31 jointly perform the sub-function of quickly emptying the air out of the suspension, to protect this against any sudden lifts of the platform occurring when very heavy goods are unloaded as units. Such lifts cannot be cancelled by the action of the levelling valves 11 and 18 due to their limited outlet flow, above all in the main leveller 11. This situation can arise for any position (I, II and III) of the multi-function control 23, so that this preventive sub-function should be efficient for the three positions of said control 23.

The two non-return valves 31 are placed in between the line coming out of the height-limiting valve 13 to supply the two levelling valves 11 and 18, and the ports P3 and P4. For this reason, when the height-limiting valve 13 has not yet come into action, the non-return valves 31 remain closed due to the fact that the delivery pressure P1 is greater than the pressure in the suspension lines 5 and 6. When a very heavy item or a set of heavy items is unloaded the bellows of the suspension 7, 8 are suddenly decompressed through the great reduction in weight on the platform, which starts to rise very quickly and forces the height-limiting valve 13 to make two consecutive changes in position until it goes into the third and last of these positions, thus connecting the line which previously supplied the non-return valves 31 to the outlet. Then said non-return valves 31 become large flow outlet ducts for the surplus air in the suspension lines 5 and 6, from ports P3 and P4 until reaching the atmospheric outlet P2, after having crossed the height-limiting valve itself 13. The sudden rise of the platform can thus be detained or reduced, preventing the harmful effects that this could have on the suspension.

After stopping the platform elevation, this will start to drop quickly until the limiting valve 13 reaches its intermediate position with all the passages closed, at which time the fast emptying of the air from the suspension will be completed. From here on, it is the levelling valves 11 or 18 which have to take on the task of lifting the platform to the height at which this was initially placed.

### D) Auto-levelling at the loading bay

This function came about as a solution to a serious drawback found in all the manual raising/lowering systems existing on the market, as the height selected to level the platform with the bay varies every time the value of the load on the vehicle alters, a variation which occurs constantly during the loading/unloading process, which means that said height has to be manually corrected on successive occasions.

The main innovation presented here lies in the auto-levelling function at the loading bay, which succeeds in keeping the selected height constant, in spite of the load variations occurring on the vehicle. After manually adjusting the height of the platform, using the functions of position II of the multi-function control 23, according to Figure 2, the driver has to press said control to its position III, at which time the function of auto-levelling at the loading bay is activated. The function-selecting valve 21 goes into position III, meaning that the port P7 is connected to the delivery line P5, as port P6 was already from position II, simultaneously causing the operation of the two mechanisms.

On one hand, the clutch device 16 establishes the temporary mechanical connection between the secondary levelling valve 18, kept until then in its neutral central position, and the height-sensing arm 12, in the position in which this is found at that time, which is that of the height selected manually. On the other hand, the upper chamber (15C) of the first positioning device 15 and the lower chamber (17C) of the second positioning device 17 were left connected to the delivery line through P7; then the positioning items are released to be inserted inside their respective devices, leaving the secondary levelling valve 18 free to move so that it can now be operated by its new mechanical connection with the height-sensing arm 12. As a result of these two simultaneous circumstances, the secondary levelling valve 18 is used to keep the manually set height constant, since its neutral central position is the one corresponding to said height. The secondary levelling valve 18 automatically corrects any variations in height caused by the loading/unloading process by means of the position of the sensor arm 12, exactly the same as was done by the main levelling valve 11 for the levelling height of the travelling vehicle when the multi-function control 23 was located in position I.

By returning the multi-function control 23 to position II, communication is again established between port P7 and the atmospheric outlet P10, so that the clutch device 16 frees the secondary levelling valve 18 from its temporary mechanical connection with arm 12, and the positioning devices 15 and 17 operate to fix this in its neutral central position ready for any future operation.

### E) Reset function.

The situation could arise of the vehicle starting up and the driver having forgotten to return the multi-function control lever 23 to position I for the travelling vehicle, this being in position II or position III. This could mean serious problems for the moving stability of the vehicle and/or damage done when going under low underpasses with the platform raised in respect of its normal position.

To prevent this from happening the system has a reset function, automatically returning the multi-function control 23 to its position 1 as soon as the vehicle starts to move, by means of a reference parameter. Said parameter activates the return valve to position I 25, as shown in Figure 2, through an electrical signal taken at the electrical connection 26.

The aforementioned electrical signal makes the return valve change position to position I 25, establishing communication between the air delivery line P5 and the rear pneumatic piloting of the function selecting valve 21, returning this, along with the multi-function control 23, to position I.

The electric circuit which activates the return valve to position I 25 through the connection 26 may have several configurations depending on the reference parameter that is to be used. It could be the connection with the electric circuit of the vehicle's brake lights, which would activate the reset function with the first operation of the brakes or the interconnection with the control module of the vehicle's ABS system, specifically with its standard connection for speed reading, which would be activated when the vehicle reaches a certain travelling speed.

### Description of a material embodiment of the levelling module (10).

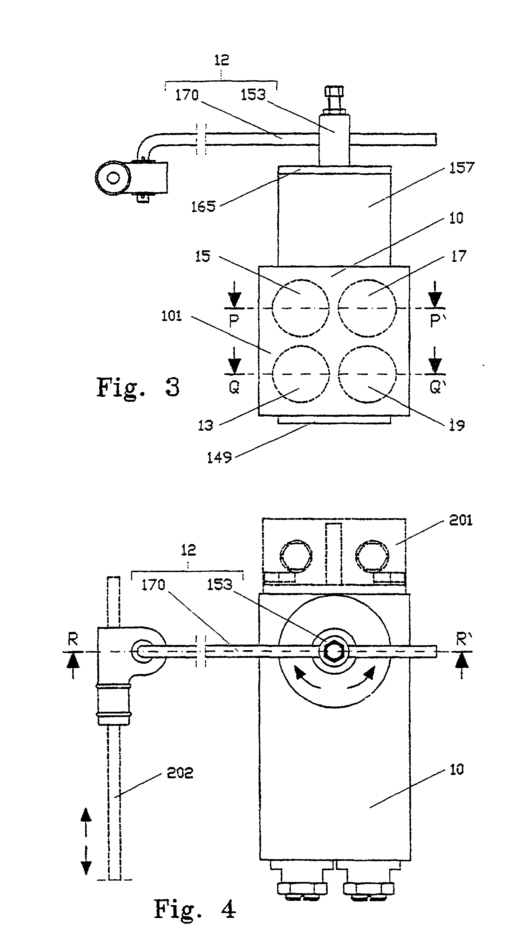

Figures 3 and 4 represent two exterior views of the material embodiment proposed for the levelling module 10. The body 101 of the levelling module 10, is defined as a square section block of extruded aluminium, in which the housings of the different devices, the internal connections between these and the ports for communication with the outside have been machined.

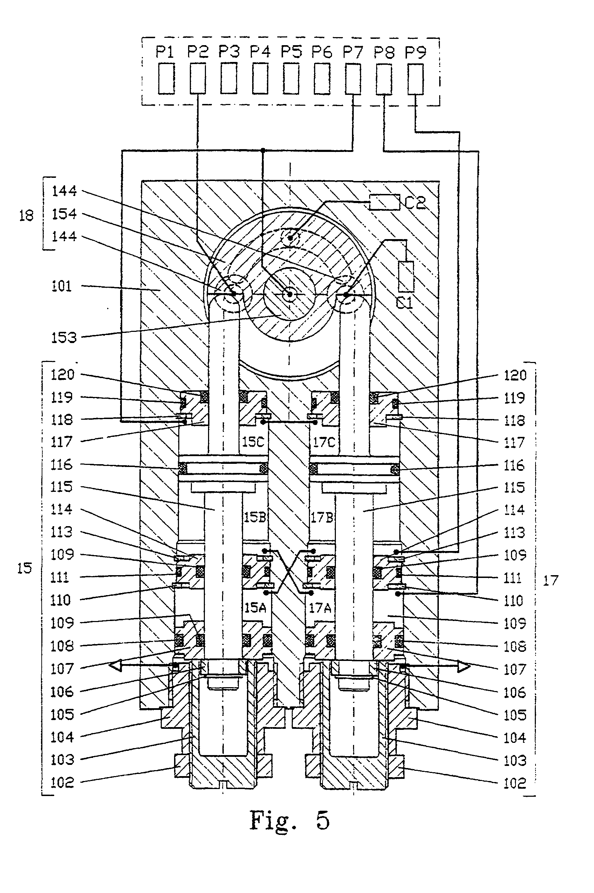

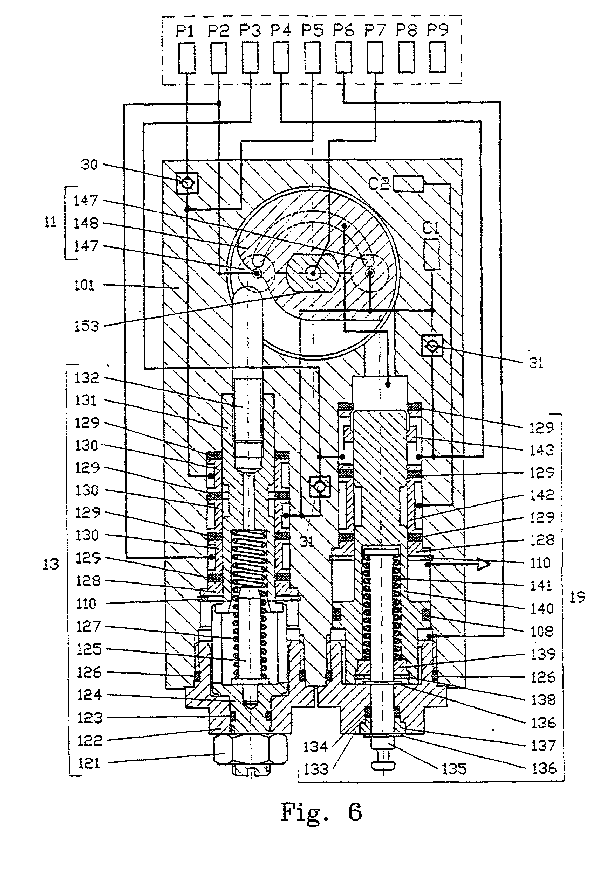

According to Figure 3, the housings of four devices have been machined on a square section face: first positioning device 15 and second positioning device 17, whose construction details can be seen along section P-P' from Figure 3 in Figure 5; apart from the height-limiting valve 13 and the valve for selecting between levellers 19, whose construction details can be seen along section Q-Q' from Figure 3 in Figure 6.

Although it has not been shown, it should be stated that the housings for the input non-return valve 30 and the two non-return valves for fast jettison 31 have been machined on the opposite face to the one seen in Figure 3.

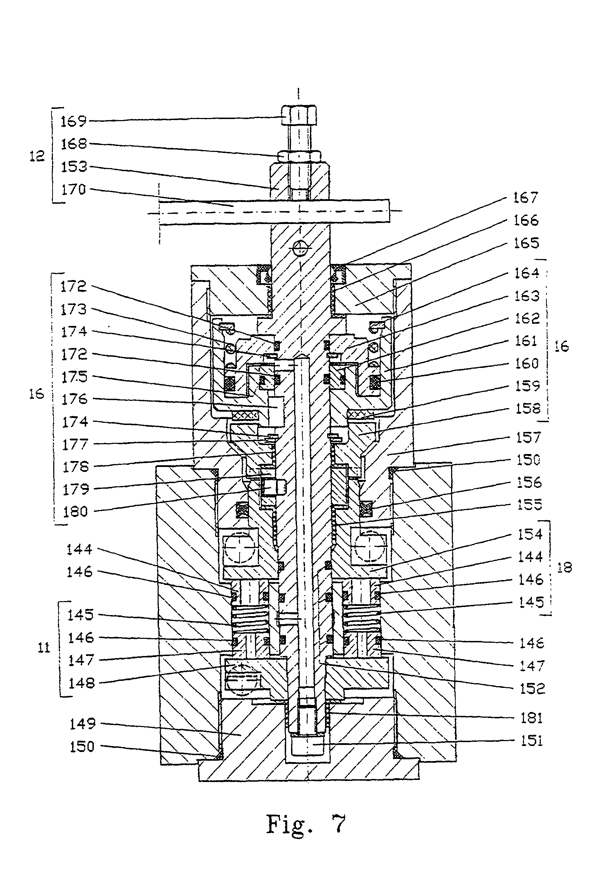

On the rectangular face of Figure 4 and on its opposite face, the previously described housings have been machined coaxially and perpendicularly, as well as the housings for the main levelling valve 11, the secondary levelling valve 18, the clutch device 16, housed inside the casing 157, and the main axle 143 as a part of the height-sensing arm 12; devices whose construction details can be seen along section R-R' from Figure 4 in Figure 7.

In Figure 4 support 201 can be seen acting as an item for securing between the levelling module 10 and the vehicle's platform.

After machining, the holes made for allowing internal connection are left open on the faces of body 101. The holes that are not for communication with the exterior are blocked by means of press-fitted stainless steel balls. The ports for communication with the exterior consist of threaded holes, in which fast connection adapters are fitted for connecting the relevant pipes. Furthermore, the alternative option of using a multiple connector system with instantaneous plugging is considered, for establishing the simultaneous connection of ports P5, P6, P7, P8 and P9 through a single multi-tube hose which allows five independent conduits, with their equivalents in the control module 20.

On the material embodiment proposed for the levelling module 10, it is important to point out that the general function of each of its individual devices and the interactions between these, through the internal connections, to accomplish the different functions, are exactly equivalent to the ones described above, for the theoretical system, according to Figures 1 and 2. For this reason, said explanations will not be repeated, and from here on, the descriptions will aim to distinguish between the general functions of each device and the material form in which this is achieved (parts, layouts, etc.). It should be stated that the fictitious ports C1 and C2 act as a link between the partial circuits of Figures 5 and 6 to form the complete internal communication circuit, which is identical to the one shown in Figure 2 for the levelling module 10 according to the theoretical system.

### Description of the material embodiment of the height-sensing arm 12.

The height-sensing arm 12 consists of the main rod 170 and the main axle 153. The intermediate rod 202, articulated at both ends, transmits vertical movements (variations of the platform height) to the main rod 170, in which rotary movements are made connected with the main axle 153, which is the part driving the corresponding internal devices.

### Description of the material embodiment of the main 11 and secondary 18 levelling valves.

According to Figure 5, 6 and 7 the assembly formed by the main levelling valve 11 and the secondary levelling valve 18 constitutes a double rotary distributor and with opposing action, with two common central passages for delivery and outlet, an independent operating passage for each element, driven by the main axle 153 in a different way for each element, and with additional mechanically driven functions to or from other devices.

In said figures, above all number 7, it can be seen that the delivery and outlet passages are formed by the central hole of the distributor bushes 144 and 147 which, grouped in pairs (depending on whether these are for delivery or outlet) share the housing and connection inside the body 101 of the levelling module 10, apart from a common spring 145 which presses these against the distributor disks 148 and 154. The contact surfaces between the bushes 144, 147 and the disks 148, 154 are super-finished to get a sealed joint, meaning that all the passages are closed when both levelling valves 11 and 18 are in their neutral central position. The operating passage of each element consists of a single slot, not all the way through, cut into the contact surface of the distributor disks 148 and 154. When the disk (148 or 154) turns, in one direction or the other, departing from its neutral central position, the aforementioned slot interferes with the central hole of one distributor bush or the other, establishing communication between the working passage and the delivery or outlet passage. This means that each element of the double distributor, leveller 11 and leveller 18 has three passages and three possible positions.

According to Figures 6 and 7, the distributor disk 1 148 of the main levelling valve 11 turns permanently and as a unit with the main axle 153. Its working passage communicates with the chamber itself where the disk 148 is housed and with the upper chamber of the valve for selecting between levellers 19, where said passage forks in a restricted way towards ports P3 and P4, the reason for which the diagrammatic representation of the main levelling valve 11 is that of a four-way three-position distributor. The distributor disk 1 148 also performs the task of driving the pusher 132 of the height-limiting valve 13, by means of the cam profile cut into the face opposite to the contact one of the bushes 147.

According to Figures 5 and 7, the distributor disk II 154 of the secondary levelling valve 18 will only be able to turn connected with the main axle 153 when the clutch device 16 is activated (Function D). In the opposite case, the positioning devices 15 and 17 will keep this in its neutral central position or drive this during function "B", completely independently of the movements of the main axle 153. The secondary levelling valve 18 needs a greater flow of air to carry out its different tasks, the reason for which the central holes of its bushes 144 will have a larger diameter than their equivalents in the main levelling valve 11. In this case, the working passage communicates with the chamber in which the distributor disk II is housed, to then connect with the valve for selecting between levellers 19 through fictitious port C2, which links the connection diagrams of Figures 5 and 6. The distributor disk II 154 has two planes cut into the face opposite the one for contact with the bushes II 144 in order to be driven, locked or released by the positioning devices 15 and 17 according to Figure 5, depending on the function activated.

### Description of the material embodiment of the positioning devices 15 and 17.

According to Figure 5, each positioning device consists basically of two moving parts (107 and 115) and two fixed parts (114 and 117) between which three pneumatically driven chambers are established, numbered as 15A, 15B and 15C for the first positioning device 15 and as 17A, 17B and 17C for the second positioning device 17, communicated according to the diagram with their respective connection ports. This turns the positioning devices 15 and 17 into two axial thrust mechanisms which, depending on the combination of connections with delivery or outlet which occurs in each of its three pneumatically driven chambers, can act on the distributor disk II 154 of the secondary levelling valve 18, to lock this in its neutral central position, or release this from the lock so that it can turn along with the main axle 153 (Function D) or force this to rotate in one direction or the other to carry out the manual raising and lowering function (Function B). Its basic structure, connections and operation exactly match the description made given for the theoretical system according to the diagram in Figure 2, so said description will not be repeated here.

It should be pointed out that both positioning devices 15 and 17 have an adjustment system, to accurately adjust the point at which they have to keep the distributor disk II 154 in its neutral central position, thus compensating for the dimensional tolerances of all the parts used in the mounting. The part used is the adjustment screw I 103 which determines the support stop of the free piston 107 and consequently the exact position of the positioner 115.

### Description of the material embodiment of the height-limiting valve 13.

The height-limiting valve 13 is, as shown in Figure 6, a slide distributor with three positions and three ways, with an intermediate position in which all the ways or passages are closed.

The movement of the slide 131 is a result of the distributor disk I 148 turning anticlockwise, after the contact between the cam profile cut into said distributor disk I 148 and the pusher 132 of the height-limiting valve 13.

The height-limiting valve 13 has an adjustment mechanism, to adjust the maximum height required for the platform, according to specifications of the different vehicles which have the suspension control system covered by this patent fitted. Adjustment is carried out by turning the adjustment screw II 124, which causes joint turning of the slide 131 thanks to the fork mechanism which links these to rotate together but move independently. Furthermore, the pusher 132 cannot turn in respect of the body of the module 101, but can indeed do so in respect of the slide 131, by means of the threaded coupling which links these. Then rotating the slide 131 one way or the other makes the pusher 132 thread in or out, modifying the length which said pusher protrudes in respect of the slide 131. This allows regulation of the turning angle of the distributor disk I 148 on which there is contact between its cam profile and the pusher 132, defining the height of the platform at which the height-limiting valve 13 comes into action.

### Description of the material embodiment of the valve for selecting between levellers 19.

The valve for leveller selection 19 is, as shown in Figure 6, a two-position, three-way slide distributor, with special configuration of the selection separator 143, which makes communications with ports P3 and P4 partially independent, and means that this can be considered a two-position five-way distributor, as has been represented in the diagram in Figure 2.

The slide 140 is kept in its lower rest position by the spring 141, a situation which occurs in position I of the multi-function control 23, keeping the main levelling valve 11 active to the detriment of the secondary levelling valve 18. When changing to positions II and III of said control, delivery is established through port P6, ordering the slide 140 towards its upper position and determining a change in the communications of the passages, which results in the deactivation of the main levelling valve 11 and the activation of the secondary levelling valve 18.

### Description of the material embodiment of the clutch device 16.

The clutch device 16 is based on a pneumatically driven friction clutch, in order to temporarily keep the distributor disk II 154 and the main axle 153 together so that these can turn together during the activation of position III of the multi-function control 23, allowing function "D" for auto-levelling on the loading bay to be performed.

According to Figures 5 and 6, port P7 communicates, through the body of module 101, with the conduit lying inside the main axle 153. According to Figure 7, said interior conduit also communicates with the pneumatically driven chamber of the clutch device 16, located between the moving clutch disk 161 and the clutch piston 163. When delivery is established through port P7, the clutch mechanism 16 is thus activated.

The fixed clutch disk 158 is joined to distributor disk II 154 and, like this, can turn freely in respect of the main axle 153. The moving clutch disk 161 is forced to turn along with the main axle 153, by means of key 176, though it can move axially in respect of this to carry out its function. There is a friction disk 159 between both disks 158, 161.

When the operation of the clutch device 16 is ordered, connecting its pneumatic drive chamber to the delivery, through port P7, the moving disk 161 moves towards the fixed disk 158, against the pressure exerted by the spring 173 which keeps said disk in its initial idle position. As a result of this movement, the three disks in question (158, 159 and 161) come into contact. The axial force exerted, in combination with the high friction coefficient of the disk 159 allows generation of high torque values resisting any relative turning between the three disks, which is what means that the distributor disk II 154 and the main axle 153 are forced to turn as a unit.

This invention is suitable for application in the manufacture of control mechanisms for pneumatic suspension.

## Claims

1. Method for controlling vehicles¹ pneumatic suspension, by mechanical-pneumatic means, carrying out the functions of:
A) Constantly maintaining the platform height during vehicle travel, by means of a main levelling valve.
B) Manually adjusting the platform height, with the vehicle at rest, to put this on a level with the loading bay, by means of a manual raising and lowering function.
C) Limiting the maximum height to which the platform can be lifted to protect the parts of the vehicle's suspension, by means of a height-limiting valve; and able also to carry out the function of:
E) Automatically returning the system to function (A) of travelling height, by means of an electric valve governed by an electrical signal generated when a particular optional control parameter is activated,
**characterised in that** this method combines functions A), B), C) and E) above with the following function:
D) Constantly maintaining any height value of the platform that has previously been selected with the manual raising-lowering function (B) on a level with the loading bay, during the whole loading or unloading process, regardless of the vehicle's load situation, by means of a secondary levelling valve supported by other devices, by mechanical-pneumatic means.

2. Method, according to claim 1, **characterised in that** this uses:
A levelling module (10) fitted with means of levelling with a height sensor and height limitation, positioning means, means of selecting between main and secondary levellers, a clutch mechanism, means of fast outlet, means of regulation, connection of communication between the different internal systems and ports for communication with the exterior; and:
A control module (20) which has means of manual operation, a mechanism for interlocking in different positions, means of selection for the different functions, manual raising and lowering control means, means for automatically returning to the normal travelling position, connections for communication between the different internal systems and ports for communication with the exterior.

3. Method, according to claims 1 and 2, **characterised in that** it uses a levelling module (10) that is formed of a main levelling valve (11), a height-sensing arm (12), a height-limiting valve (13), an air passage restrictor (14), a secondary levelling valve (18), a first positioning device (15) and a second positioning device (17) of the secondary levelling valve, a clutch mechanism (16) between the height-sensing arm and the secondary levelling valve, a valve for selecting between levellers (19) an inlet non-return valve (30) and two fast-emptying non-return valves (31).

4. Method, according to claims 1 and 2, **characterised in that** it uses a control module (20) that is formed of a function-selecting valve (21) with three positions: I, II and III, an interlocking mechanism (22) for the three different positions, a multi-function control (23) a raising and lowering function control valve (24), a valve for automatic return to position I (25) and an electrical connection (26) for the signal for return to position I.

5. Method, according to any of claims 1 to 4, **characterised in that** it uses an assembly of the two blocks (10 and 20) that has communication ports (P1 to P10) for communicating between these or with other devices; the levelling module (10) has nine ports for communication with the exterior, of which three communicate with parts of the vehicle, these being P1, P3 and P4; P1 being for supplying compressed air from the suspension cylinder (3), air outlets P3 and P4 for control respectively of the right and lefthand suspension lines (5, 6) ; port P2 communicates with an air outlet to atmospheric pressure, with the remaining five ports P5, P6, P7, P8 and P9 for direct communication with their equivalents in the control module (20); the control module (20) has six ports for communication with the exterior, five of which, P5, P6, P7, P8 and P9 communicate directly with their equivalents in the levelling module (10); with the other port P10 communicating with the atmospheric outlet.

6. Method, according to claims 1, 2 or 3, **characterised in that** the function of constantly maintaining on a level with the loading bay (D) is carried out by using a secondary levelling valve (18) which assumes, as the temporary levelling height, any platform height which can be selected by means of the manual raising and lowering function (B); a secondary levelling valve (18) which is kept in its neutral central position, regardless of the movements of the sensor arm (12), by two positioner devices (15, 17), until, after fixing the temporary levelling height, being freed from the locking by the positioners (15, 17) to be able to move along with the height-sensing arm (12) by the action of a pneumatically driven clutch device (16).

7. Method, according to claims 1, 2, 3, 5 or 6, **characterised in that** the secondary levelling valve (18) and the positioning devices (15, 17) apart from intervening in function D) also do so in the function for manual adjustment of the platform height (B); since the secondary levelling valve (18) acts as a pneumatic distributor for said function B). by being driven by the positioning devices (15, 17) depending on the signals received from the control module (20).

8. Levelling module for control of the pneumatic suspension of vehicles for carrying out the method according to claim 1, which consists of the following items in the same block:
an arm (12) for sensing any variations in the height of the vehicle's platform;
a main levelling valve (11), permanently driven by the sensor arm (12), which keeps the vehicle's travelling height constant (function A);
a height-limiting valve (13), driven by the sensor arm (12), which, through the main levelling valve (11) prevents excessive elevation of the platform (Function C);
a valve for selecting between levellers (19), pneumatically governed from a control module, which determines the operation of either the main levelling valve (11) or that of a secondary levelling valve;
a port for supplying compressing air from a cylinder;
ports for communication with the vehicle's suspension lines;
ports for communication with a manual control module, from which the pneumatic pilot signals are received which determine the function to be carried out by the levelling module;
internal communications between the different individual devices and with the ports for exterior communication;
one or more ports for outlet to atmospheric pressure;
a non-return valve for delivery (30);
non-return valves for fast jettison of the air from the suspension (31);
**characterised in that**, within the same block, there are also:
a secondary levelling valve (18) which is not permanently driven by the sensor arm (12);
a clutch mechanism (16) which temporary couples the secondary levelling valve (18) with the sensor arm (12);
two positioning devices (15, 17) of the secondary levelling valve (18); depending on the position selected in a manual control module, pneumatic control will be established over the different devices of the levelling module which will determine different forms of action of the secondary levelling valve (18);
the secondary levelling valve (18) can be kept in its neutral central position, regardless of the movements of the sensor arm (12), by means of the two positioning devices (15, 17);
the secondary levelling valve (18) can be driven one way or the other, by means of the two positioning devices (15, 17), to act as a pneumatic distributor in the function for manual adjustment of the platform height (Function B);
the secondary levelling valve (18) can be released by the positioning devices (15, 17) in order, by means of the clutch mechanism (16), for this to be temporarily coupled with the height-sensing arm (12) and, during the whole loading or unloading process, keep any height value of the platform that has previously been selected with function B) constantly at a level with the loading bay, regardless of the vehicle's load situation (Function D).

9. Module, according to claim 8, **characterised in that** the vertical movement which is transmitted from the reference wheel axle (9) to one end of the main rod (170) of the sensor arm (12) is here transformed into a rotary movement which, by means of the rotation of the main axle (153) is directly transmitted to the main levelling valve (11) and can also be transmitted to the secondary levelling valve (18), on condition that the clutch mechanism (16) operates.

10. Module according to claim 8, **characterised in that** the positioning devices (15, 17) are two axial thrust mechanisms which, depending on the combination of pressures exerted in each of the three pneumatic action chambers, can act on the secondary levelling valve (18) to lock this, release it or move it depending on the function that is being executed at that time.

11. Module, according to any of claims 8 to 10, **characterised in that** the function of keeping the platform constantly on a level with the loading bay (D) is carried out by using a secondary levelling valve (18) which assumes, as temporary levelling height, any platform height that can be selected by means of the manual raising and lowering function (B); secondary levelling valve (18) which is kept in its neutral central position, regardless of the movements of the sensor arm (12), by two positioning devices (15, 17); until, after setting the temporary levelling height, this is released from the locking made by the positioners (15, 17) in order to be able to move along with the height-sensing arm (12) by the action of a pneumatically driven friction clutch device (16).

12. Module, according to any of claims 8 to 11, **characterised in that**, apart from being used in function D) the secondary levelling valve (18) and the positioning devices (15, 17) also intervene in the function for manual adjustment of the platform height (B); since the secondary levelling valve (18) acts as a pneumatic distributor for said function B) by being driven by the positioning devices (15, 17) depending on the signals received from the corresponding control module.

13. Module, according to claim 8, **characterised in that** its body (101) is a square section block of extruded aluminium which has been machined to be able to house the parts that are to constitute the different individual devices and to be able to establish the different internal communication passages between said devices, apart from the ports for communication with the exterior.

14. Module, according to claims 8 and 13, **characterised in that** the two positioning devices (15 and 17), the height-limiting valve (13) and the valve for selecting between levellers (19) are housed on one of the square section faces of the body (101) of the levelling module (10); the inlet non-return valve (30) and the two fast emptying non-return valves (31) are housed on the face opposite to the anterior one; and the main levelling valve (11), the secondary levelling valve (18), the clutch mechanism (16) and the main axle (153) of the height-sensing arm (12) are housed on two rectangular faces opposite each other and perpendicular to the anterior ones.

15. Module, according to claim 8, **characterised in that** the height-limiting valve (13) and the valve for selecting between levellers (19) are slide-type pneumatic distributors; with the leveller-selection valve (19) being pneumatically driven and with spring return; and the height-limiting valve (13) being mechanically controlled, by being driven by the main levelling valve itself (11) and spring return.

16. Module, according to any of claims 8 to 12, **characterised in that** the assembly formed by the main levelling valve (11) and the secondary levelling valve (18) constitute a double rotary distributor and with opposing action, with two common central passages for delivery and outlet constituted by the distributor bushes (144 and 147); its working passages being formed by the single slot, not all the way through, which both opposite distributor disks (148 and 154) have cut into their sealed face against the aforementioned distributor bushes (144 and 147); **in that** the distributor disk I (148) of the main levelling valve (11), turns permanently coupled with the main axle (153) in order to perform function A) and also fulfils the function of acting as a cam profile for driving the height-limiting valve (13); **in that** the distributor disk II (154) of the secondary levelling valve (18) will only be able to turn along with the main axle (153) when the clutch mechanism (16) is operating during function D) and also performing the function of having two planes cut into it to act as a base for the operation of the two positioning devices (15, 17) to be locked, driven or released, depending on whether function A), B) or D) is being performed; **in that** the central holes of the distributor bushes II (144) are much larger than their equivalents in the distributor I bushes (147) due to the greater air flow needed by the secondary levelling valve (18) to carry out functions B) and D); and that each pair of distributor bushes (144 and 147), depending on whether these are for delivery or outlet, has a common through housing in the body (101) of the levelling module, where a single spring (145) is also housed, to simultaneously exert pressure on the pair of bushes (144, 147) against their respective disks (154, 148).

17. Module, according to any of claims 8 to 12, **characterised in that** the internal pneumatic connection, between the body (101) of the levelling module and the clutch mechanism (16) is through an interior conduit of the main axle (153).

18. Module, according to claim 8, **characterised in that** the ports which communicate with the control module can consist of a single multiple port fast-action connector on each of the two modules, between which a single multi-tube hose would be used to obtain independent compressed air conduits.

## Patentansprüche

1. Verfahren zur mechanisch-pneumatischen Steuerung der Luftfederung eines Fahrzeugs, mit dem die folgenden Funktionen ausgeführt werden:
A) Über ein Hauptausgleichsventil konstante Beibehaltung der Plattformhöhe während der Fahrt.
B) Über eine manuelle Hebe- und Senkfunktion manuelle Einstellung der Plattformhöhe bei Fahrzeugstillstand zur Bündigstellung derselben mit der Ladebucht.
C) Begrenzung der maximalen Hubhöhe der Plattform zum Schutz der Teile der Fahrzeugfederung über ein Höhenbegrenzungsventil; außerdem Fähigkeit zur Ausführung der folgenden Funktion:
E) Automatische Rückstellung des Systems auf Funktion (A) -Fahrthöhe- über ein Elektroventil. Dieses wird über ein Elektrosignal gesteuert, das bei Aktivierung eines bestimmten optionalen Parameters ausgelöst wird;
**dadurch gekennzeichnet, dass** dieses Verfahren die vorstehend erwähnten Funktionen A), B), C) und E) mit der folgenden Funktion kombiniert:
D) Konstante mechanisch-pneumatische Aufrechterhaltung über den gesamten Be- bzw. Entladevorgang einer beliebigen, vorher durch die manuelle Hebe- und Senkfunktion eingestellten Plattformhöhe (B) zur Bündigstellung mit der Ladebucht, ungeachtet des Beladungszustands des Fahrzeugs und zwar über ein sekundäres, von anderen Vorrichtungen getragenes Ausgleichsventil.

2. Verfahren nach Anspruch 1, **gekennzeichnet durch** die Verwendung folgender Teile:
Ein Ausgleichsmodul (10), ausgestattet mit einer Ausgleichsvorrichtung mit Höhensensor und Höhenbegrenzung, Positioniervorrichtung, Wahlvorrichtung zwischen Haupt- und Sekundär-Ausgleichsvorrichtung, einem Kupplungsmechanismus, Schnellablassvorrichtung, Reguliervorrichtung, Kommunikationsverbindung zwischen den verschiedenen internen Systemen und Anschlüssen zur Kommunikation mit der Außenwelt; außerdem:
Ein Steuermodul (20) mit manueller Bedienung, ein Verriegelungsmechanismus für verschiedene Positionen, einer Wahlvorrichtung für die verschiedenen Funktionen, einer Steuervorrichtung für das manuelle Anheben und Absenken, einer automatischen Rückstellvorrichtung in die normale Fahrtposition, Kommunikationsverbindungen zwischen den verschiedenen internen Systemen und den Anschlüssen zur Kommunikation mit der Außenwelt.

3. Verfahren nach Anspruch 1 und 2, **dadurch gekennzeichnet, dass** es ein Ausgleichsmodul 10) benutzt, das aus folgenden Komponenten besteht: einem Hauptausgleichsventil (11), einem Höhenmessarm (12), einem Höhenbegrenzungsventil (13), einem Luft-Drosselventil (14), einem sekundären Ausgleichsventil (18), einer ersten Positioniervorrichtung (15) und einer zweiten Positioniervorrichtung (17) des sekundären Ausgleichsventils, einem Kupplungsmechanismus (16) zwischen dem Höhenmessarm und dem sekundären Ausgleichsventil, einem Ventil zum Umschalten zwischen den Ausgleichsvorrichtungen (19), einem Einlass-Rückschlagventil (30) und zwei schnell ablassenden Rückschlagventilen (31).

4. Verfahren nach Anspruch 1 und 2, **dadurch gekennzeichnet, dass** es ein Steuermodul (20) benutzt, das aus den folgenden Komponenten besteht: einem Funktionswahlventil (21) mit den drei Positionen I, II und III, einem Verriegelungsmechanismus (22) für die drei verschiedenen Positionen, einer Mehrzwecksteuerung (23), einem Steuerventil für die Hebe- und Senkfunktion (24), einem Ventil für die automatische Rückstellung in Position I (25) und einer elektrischen Verbindung (26) für die Signalrückstellung in Position I.

5. Verfahren nach jedem der Ansprüche 1 bis 4, **dadurch gekennzeichnet, dass** es eine Baugruppe aus den beiden Blöcken (10 und 20) benutzt, die mit Verbindungsanschlüssen (P1 bis P10) zur Kommunikation untereinander oder mit anderen Vorrichtungen ausgestattet ist; das Ausgleichsmodul (10) hat neun Anschlüsse zur Kommunikation mit der Außenwelt, von denen drei mit Teilen des Fahrzeugs kommunizieren: dies sind P1, P3 und P4; P1 liefert Druckluft vom Federungszylinder (3), die Luftablässe P3 und P4 dienen zur Steuerung der linken bzw. rechten Federungslinie (5, 6); Anschluss P2 ist mit einem Luftablass an den atmosphärischem Druck, mit den fünf verbleibenden Anschlüssen P5, P6, P7, P8 und P9 für die direkte Kommunikation mit ihren Gegenparts im Steuermodul (20) verbunden; das Steuermodul (20) hat sechs Anschlüsse zur Kommunikation mit der Außenwelt, von denen fünf, P5, P6, P7, P8 und P9 direkt mit ihren Äquivalenten im Ausgleichsmodul (10) verbunden sind; wobei der andere Anschluss P10 mit dem atmosphärischen Auslass verbunden ist.

6. Verfahren nach Anspruch 1, 2, oder 3, **dadurch gekennzeichnet, dass** die Funktion zur konstanten Beibehaltung einer bündigen Höhe mit der Ladebucht (D) durch ein sekundäres Ausgleichsventil (18) erfüllt wird; dieses übernimmt als temporäre Nivellierungshöhe jede Plattformhöhe, die durch die manuelle Hebe- und Senkfunktion (B) gewählt werden kann; ein sekundäres Ausgleichsventil (18), das von zwei Positioniervorrichtungen (15, 17) unabhängig von den Bewegungen des Sensorenarms (12) in seiner neutralen Mittelposition gehalten wird, bis die Vorrichtung nach Festlegung der temporären Nivellierungshöhe von den Positionieren (15, 17) entriegelt wird, um sich durch den Antrieb durch eine pneumatische Kupplungsvorrichtung (16), gemeinsam mit dem Höhensensorarm (12) bewegen zu können.

7. Verfahren nach Anspruch 1, 2, 3, 5 oder 6, **dadurch gekennzeichnet, dass** das sekundäre Ausgleichsventil (18) und die Positioniervorrichtungen (15, 17) nicht nur in Funktion D) eingreifen, sondern auch in die manuelle Einstellfunktion der Plattformhöhe (B); da das sekundäre Ausgleichsventil (18) als Druckluftverteiler für besagte Funktion B) dient, indem er durch die Positioniervorrichtungen (15, 17) entsprechend der vom Steuermodul (20) empfangenen Signale angetrieben wird.

8. Ausgleichsmodul zur Steuerung der Luftfederung von Fahrzeugen zur Durchführung des Verfahrens nach Anspruch 1. Dieses besteht aus den folgenden Komponenten im gleichen Block:
einem Arm (12) zum Fühlen jeglicher Änderung der Plattformhöhe des Fahrzeugs;
einem ständig durch den Fühlerarm (12) betriebenen Hauptausgleichsventil (11), das die Fahrthöhe des Fahrzeugs konstant hält (Funktion A);
einem durch den Fühlerarm (12) betriebenen Höhenbegrenzungsventil (13), das über das Hauptausgleichsventil (11) ein übermäßiges Anheben der Plattform verhindert (Funktion C);
einem von einem Steuermodul aus druckluftbetriebenen Ventil zur Wahl zwischen den Ausgleichsvorrichtungen (19), mit dem auf das Hauptausgleichsventil (11) oder auf das sekundäre Ausgleichsventil umgeschaltet wird;
einem Anschluss zur Druckluftversorgung durch einen Zylinder;
Anschlüssen zur Kommunikation mit den Federungslinien des Fahrzeugs;
Anschlüssen zur Kommunikation mit einem manuellen Steuermodul, von dem aus die pneumatischen Steuersignale zur Bestimmung der vom Ausgleichsmodul wahrzunehmenden Funktion empfangen werden;
interne Verbindungen zwischen den verschiedenen Einzelvorrichtungen und mit den Verbindungsanschlüssen zur Außenwelt;
einem oder mehreren Anschlüssen zum Ablass an den Atmosphärendruck:
einem Rückschlagventil zur Freigabe (30);
Rückschlagventilen zum schnellen Notablass der Luft aus der Federung (31);
**dadurch gekennzeichnet, dass** sich im gleichen Block außerdem die folgenden Komponenten befinden:
ein sekundäres Ausgleichsventil (18), welches nicht permanent durch den Fühlerarm (12) betrieben wird;
ein Kupplungsmechanismus (16), welcher das sekundäre Ausgleichsventil (18) vorübergehend mit dem Fühlerarm (12) verkuppelt;
zwei Positioniervorrichtungen (15, 17) des sekundären Ausgleichsventils (18);
entsprechend der mit einem manuellen Steuermodul gewählten Position wird die Druckluflsteuerung über die verschiedenen Vorrichtungen des Ausgleichsmoduls zur Bestimmung der verschiedenen Betriebsmodi des sekundären Ausgleichsventils (18) hergestellt;
unabhängig von den Bewegungen des Fühlerarms (12) kann das sekundäre Ausgleichsventil (18) über die beiden Positioniervorrichtungen (15, 17) in der neutralen Mittelposition gehalten werden;
über die beiden Positioniervorrichtungen (15, 17) kann das sekundäre Ausgleichsventil (18) in die eine oder andere Richtung verfahren werden, um als Druckluftverteiler in der manuellen Einstellfunktion der Plattformhöhe (Funktion B) zu agieren;
das sekundäre Ausgleichsventil (18) kann durch die beiden Positioniervorrichtungen (15, 17) freigegeben werden, damit es über den Kupplungsmechanismus (16) vorübergehend mit dem Höhenfühlerarm (12) gekoppelt werden kann, und um während des gesamten Be- bzw. Entladevorgangs eine beliebige, über die Funktion B) vorher eingestellte Plattformhöhe konstant auf einer Höhe mit der Ladebucht halten zu können, und zwar unabhängig vom Beladungszustand des Fahrzeugs (Funktion D).

9. Modul nach Anspruch 8, **dadurch gekennzeichnet, dass** die von der Achse des Referenzrads (9) übertragene Vertikalbewegung in Richtung eines Endes der Hauptstange (170) des Fühlerarms (12) hier in eine Rotationsbewegung umgewandelt wird, die durch die Rotation der Hauptachse (153) direkt auf das Haupt-Ausgleichsventil (11) übertragen wird und auch auf das sekundäre Ausgleichsventil (18) übertragen werden kann, sofern der Kupplungsmechanismus (16) in Betrieb ist.

10. Modul nach Anspruch 8, **dadurch gekennzeichnet, dass** die Positioniervorrichtungen (15, 17) zwei Axialschubmechanismen darstellen, die in Abhängigkeit von der Kombination der in jeder der drei Druckluftkammern herrschenden Drücke auf das sekundäre Ausgleichsventil (18) wirken können zum Verriegeln, Öffnen bzw. Bewegung desselben entsprechend der zum jeweiligen Zeitpunkt ausgeführten Funktion.

11. Modul nach jedem der Ansprüche 8 bis 10, **dadurch gekennzeichnet, dass** die Funktion zur ständigen Aufrechterhaltung der Plattformhöhe auf der gleichen Höhe mit der Ladebucht (D) durch die Verwendung eines sekundären Ausgleichsventils (18) ausgeführt wird, welches eine beliebige über die manuelle Hebe- und Senkfunktion (B) zu wählende Plattformhöhe als temporäre Nivellierungshöhe übernehmen kann; durch ein sekundäres Ausgleichsventil (18), welches durch zwei Positioniervorrichtungen (15, 17) unabhängig von den Bewegungen des Fühlerarms (12) in seiner neutralen Mittelposition gehalten wird; bis nach Einstellung der temporären Nivellierungshöhe der Mechanismus von der Verriegelung durch die Positioniervorrichtungen (15, 17) freigegeben wird, um sich gemeinsam mit dem durch eine druckluftgetriebene Reibungskupplung (16) angetriebenen Höhenfühlerarm (12) zu bewegen.

12. Modul nach jedem der Ansprüche 8 bis 11, **dadurch gekennzeichnet, dass** das sekundäre Ausgleichsventil (18) und die Positioniervorrichtungen (15, 17) neben ihrer Verwendung für Funktion D) auch in der manuellen Einstellfunktion der Plattformhöhe (B) intervenieren, wobei das sekundäre Ausgleichsventil (18) für besagte Funktion B) als Druckluftverteiler agiert, indem es von den Positioniervorrichtungen (15, 17) entsprechend den von dem entsprechenden Steuermodul empfangenen Signale angetrieben wird.

13. Modul nach Anspruch 8, **dadurch gekennzeichnet, dass** sein Gehäuse (101) aus einem Quadratblock aus extrudiertem Aluminium besteht, das für die Aufnahme der Teile der verschiedenen Vorrichtungen und zur Herstellung der verschiedenen internen Verbindungsanschlüsse zwischen den besagten Vorrichtungen, neben den Verbindungsanschlüssen mit der Außenwelt, vorgesehen ist.

14. Modul nach Anspruch 8 und 13, **dadurch gekennzeichnet, dass** die beiden Positioniervorrichtungen (15 und 17), das Höhenbegrenzungsventil (13) und das Ventil zum Umschalten zwischen den Ausgleichsvorrichtungen (19) auf einer der quadratischen Gehäuseflächen (101) des Ausgleichsmoduls (10) untergebracht sind; das Einlass-Rückstoßventil (30) und die beiden schnell leerenden Rückstoßventile (31) sind auf der der vorgenannten Fläche entgegengesetzten Seite angebracht; und das Haupt-ausgleichsventil (11), das sekundäre Ausgleichsventil (18), der Kupplungsmechanismus (16) und die Hauptachse (153) des Höhenfühlerarms (12) sind auf zwei rechteckigen, einander gegenüberliegenden und senkrecht zu den vorgenannten Flächen stehenden Flächen angebracht.

15. Modul nach Anspruch 8, **dadurch gekennzeichnet, dass** das Höhenbegrenzungsventil (13) und das Ventil zur Wahl zwischen den Ausgleichsvorrichtungen (19) Druckluftverteiler mit Schieber sind; hierbei wird das Ventil zur Wahl der Ausgleichsvorrichtungen (19) pneumatisch betätigt und ist mit einem Federrückstellmechanismus ausgestattet; das Höhenbegrenzungsventil (13) wird mechanisch gesteuert, indem es durch das Hauptausgleichsventil (11) und einen Federrückstellmechanismus betätigt wird.

16. Modul nach den Ansprüchen 8 bis 12, **dadurch gekennzeichnet, dass** die aus dem HauptausgIeichsventil (11) und dem sekundären Ausgleichsventil (18) bestehende Baugruppe einen gegenläufigen Doppel-Rotationsverteiler mit zwei zentralen Durchgängen für Ein- und Auslass in Form von Verteilerbuchsen (144 und 147) bilden; seine Arbeitsöffnungen bestehen aus dem einzigen, nicht ganz durchgezogenen Schlitz, den die beiden gegenüberliegenden Verteilerscheiben (148 und 154) auf ihrer versiegelten Vorderseite gegen die vorstehend genannten Verteilerbuchsen (144 und 147) haben; dass sich die Verteilerscheibe I (148) des Hauptausgleichventils (11) permanent dreht, wobei sie mit der Hauptachse (153) zur Ausführung der Funktion A) verbunden ist und gleichzeitig als ein Nockenprofil zur Betätigung des Höhenbegrenzungsventils (13) agiert; dass die Verteilerscheibe II (154) des sekundären Ausgleichsventils (18) sich nur dann gemeinsam mit der Hauptachse (153) drehen kann, wenn der Kupplungsmechanismus (16) während Funktion D) betrieben wird und gleichzeitig die Funktion ausführt, dass zwei Ebenen in ihn hineingeschnitten sind, um als Grundlage für die Verriegelung, Betätigung oder Freigabe entsprechend der auszuführenden Funktion A), B) oder D) der beiden Positioniervorrichtungen (15, 17) zu dienen; dass die zentralen Löcher der Verteilerbuchsen II (144) weitaus größer sind als ihre Gegenstücke in den Verteilerbuchsen I (147) wegen des größeren Bedarfs an Luftdurchsatz des sekundären Ausgleichsventils (18) zur Ausführung der Funktionen B) und D); und dass jedes Verteilerbuchsen-Paar (144 und 147), je nachdem, ob die Buchsen zum Druckaufbau oder zum Auslass bestimmt sind, eine gemeinsame Durchführung im Gehäuse (101) des Ausgleichsmoduls hat, in dem ebenfalls eine einzelne Feder (145) untergebracht ist, um gleichzeitig das Buchsenpaar (144, 147) gegen ihre jeweiligen Scheiben (154, 148) zu drücken.

17. Modul nach jedem der Ansprüche 8 bis 12, **dadurch gekennzeichnet, dass** die interne Druckluftverbindung zwischen dem Gehäuse (101) des Ausgleichsmoduls und dem Kupplungsmechanismus (16) durch einen internen Kanal der Hauptachse (153) geführt wird.

18. Modul nach Anspruch 8, **dadurch gekennzeichnet, dass** die mit dem Steuermodul kommunizierenden Anschlüsse aus einer einzigen Mehrfach-Port-Schnellsteckverbindung an jedem der beiden Module bestehen können, zwischen denen ein einziger Schlauch zur Bildung von unabhängigen Druckluftleitungen verwendet wird.

## Revendications

1. Méthode de contrôle de la suspension pneumatique de véhicules par le biais de moyens mécaniques pneumatiques, qui ont les fonctions de :
A) Maintenir la plate-forme à garde au sol constante au cours de la marche du véhicule, par le biais d'un clapet de nivelage principal;
B) Ajuster manuellement la garde au sol de la plate-forme, lorsque le véhicule est au repos, afin de mettre ce dernier au niveau du quai de charge, par le biais d'un système manuel de fonction de soulèvement et d'abaissement;
C) Limiter la hauteur maximale à laquelle la plate-forme peut être soulevée, afin de protéger les éléments de suspension du véhicule, par le biais d'un clapet de limitation de garde au sol ;
Et aussi pouvant avoir la fonction de :
E) Faire revenir automatiquement le système à la fonction A) de hauteur de marche par le biais d'un clapet électrique gouverné par un signal électrique déclenché lorsqu'un paramètre de contrôle optionnel est activé,
Qui se **caractérise par le fait que** cette méthode combine les fonctions A), B), C), et E) ci-dessus avec les fonctions suivantes:
D) Maintenir constamment n'importe quelle valeur de garde au sol de la plate-forme qui ait été préalablement choisie avec la fonction de soulèvement - abaissement (B) au niveau du quai de charge, au cours de la totalité du processus de charge ou de décharge, indépendamment de l'état de charge du véhicule, par le biais d'un deuxième clapet de nivelage supporté par d'autres mécanismes, par un moyen mécanique - pneumatique.

2. Méthode, conformément à la revendication 1, qui se **caractérise par le fait qu'**elle utilise :
- Un module de mise au niveau (10) installé avec des moyens de mise au niveau muni d'un senseur de hauteur et de limitation de hauteur, des moyens de positionnement, des moyens de sélection entre le niveleur primaire et secondaire, un mécanisme d'embrayage, des moyens de branchement rapide, des moyens de réglage, une connexion de communication entre les différents systèmes internes et ports de communication avec l'extérieur, et
- Un module de contrôle (20) qui possède des moyens d'opération manuelle pour la mise en situation sur de différentes positions, des mécanismes de sélection pour les différentes fonctions, des mécanismes de contrôle de soulèvement et d'abaissement manuels, des mécanismes de retour automatique sur la position de déplacement normal, des connexions pour la communication entre les différents systèmes internes et les ports de communication avec l'extérieur.

3. Méthode, conformément aux revendications 1 et 2, qui se **caractérise par le fait qu'**elle utilise un module (10) qui est formé d'un clapet de nivelage (11) d'un bras senseur de garde au sol (12), d'un clapet de limitation de garde au sol (13), un limiteur de passage d'air (14), un clapet secondaire de nivelage (18), premier un système de positionnement (15) et un second système de positionnement (17) de la clapet secondaire de nivelage, un mécanisme d'embrayage (16) entre le bras senseur de garde au sol et le clapet secondaire et le clapet de nivelage secondaire, une clapet pour la sélection entre les niveleurs (19), un clapet d'entrée non - retour (30) et deux clapets de vidange rapide à non - retour (31).

4. Méthode, conformément aux revendications 1 et 2, **caractérisée par le fait qu'**elle utilise un module (20) qui est formé par une soupe de sélection de fonction (21) à trois positions : I, II, et III, un mécanisme de situation (22) sur chacune des trois positions, un contrôle multifonction (23), un clapet de contrôle de fonction de soulèvement et d'abaissement (24), un clapet pour le retour automatique sur la position I (25) et une connexion électrique (26) pour le signal de retour sur la position I.

5. Méthode, conformément à certaines des revendications 1 à 4, qui se **caractérise par le fait qu'**elle utilise un assemblage des deux blocs (10) et (20) qui possède des ports de communications (P1 à P10) pour la communication entre ceux-ci ou avec d'autres dispositifs ; le module de nivelage (10) possède neuf ports de communication avec l'extérieur, desquels trois communiquent avec des pièces du véhicule, celles-ci étant P1, P3 et P4 ; P1 servant à fournir l'air comprimé provenant du cylindre de support (3), les prises d'air P3 et P4 pour le contrôle des circuits de suspension de droite et de gauche (5, 6) respectivement; le port P2 communique avec une prise d'air à la pression atmosphérique, avec les cinq ports restants, P5, P6, P7, P8 et P9 pour la communication directe avec leurs équivalents sur le module de contrôle (20) ; le module de contrôle (200) possède six ports pour la communication avec l'extérieur, cinq desquels, P5, P6, P7, P8 et P9 communiquent directement avec leurs équivalents sur le module de nivelage (10) ; avec l'autre port P10 qui communique avec la prise atmosphérique.

6. Méthode, conformément aux revendications 1, 2 ou 3, qui se caractérisent par le fait que la fonction de maintien constant d'un niveau avec le quai de charge (D) est menée en utilisant un clapet secondaire de nivelage (18) qui assume, comme hauteur de nivelage temporaire, n'importe quelle hauteur de plate-forme qui peut être sélectionnée par le biais d'une fonction manuelle de soulèvement ou d'abaissement (B) ; un clapet secondaire de nivelage (18) qui est maintenu sur sa position centrale de point mort, sans tenir compte des mouvements du bras du senseur (12) au moyen de deux dispositifs de positionnement (15, 17), jusqu'à ce que, après avoir fixé la hauteur temporaire de nivelage, ayant libéré du blocage par les positionneurs (15, 17), pouvoir de déplacer avec le bras senseur de garde au sol (12) par l'action d'un mécanisme d'embrayage contrôlé pneumatiquement (16).

7. Méthode conformément aux revendications 1, 2, 3, 5 ou 6, qui se **caractérise par le fait que** 1 clapet secondaire de nivelage (18) et les mécanismes de positionnement (15, 17) hormis **le fait qu'**ils interviennent dans la fonction D), ils agissent aussi dans la fonction d'ajustage manuel de la garde au sol de la plate-forme (B) ; étant donné que le clapet secondaire de nivelage (18) agit comme un distributeur pneumatique pour la dite fonction B) étant conduite par les mécanismes de positionnement (15, 17) selon les signaux reçus du module de contrôle (20).

8. Module de nivelage pour le contrôle de la suspension pneumatique de véhicules pour mener à terme la méthode conformément à la revendication 1, qui comporte les éléments suivants dans le même bloc :
un bras (12) destiné à capter toute variation de garde au sol de la plate-forme du véhicule ;
un clapet principal de nivelage (11), conduit en permanence par le bras senseur (12), qui maintient la garde au sol du véhicule constante (fonction A) ;
un clapet de limitation de garde au sol (13), conduite par le bras senseur (12), qui, par le biais du clapet principal de nivelage (11) évite une élévation excessive de la plate-forme (fonction C) ;
un clapet pour sélectionner entre les niveleurs (19), pneumatiquement gouvernés par le module de contrôle, qui détermine l'agissement du clapet principal de nivelage (11) ou celle d'un clapet secondaire de nivelage ;
un port fournissant de l'air comprimé en provenance d'un cylindre ;
des ports de communication avec les circuits de suspension du véhicule ;
des ports de communication avec un module de contrôle manuel, à travers lesquels les signaux pilotes pneumatiques sont reçus et qui déterminent la fonction qui doit être menée par le module de nivelage ;
des communications internes entre les différents mécanismes individuels et avec les ports destinés à la communication extérieure ;
un ou plusieurs ports destinés aux prises vers la pression atmosphériques ;
un clapet de non-retour pour la libération (30) ;
des clapets non-retour pour la vidange rapide de l'air de la suspension (31) ; qui se **caractérise par** le fait à l'intérieur du même bloc se trouvent aussi :
un clapet secondaire de nivelage (18) qui n'est pas conduit en permanence par un bras senseur (12) ;
un mécanisme d'embrayage (16) qui couple temporairement le clapet secondaire de nivelage (18) avec le bras senseur (12) ;
deux mécanismes de positionnement (15, 17) du deuxième clapet de nivelage (18) ;
Le clapet secondaire de nivelage (18) peut être maintenu sur sa position centrale de point mort, sans tenir compte des mouvements du bras du senseur (12) au moyen de deux dispositifs de positionnement (15, 17) ;
Le clapet secondaire de nivelage peut être conduit d'une direction à l'autre par le biais de deux mécanismes de positionnement (15, 17), pour agir comme distributeur pneumatique dans la fonction pour l'ajustage manuel de la hauteur de la plate-forme (Fonction B) ;
Le clapet secondaire de nivelage (18) peut être engagé moyennant les mécanismes de positionnement (15, 17), par le biais du mécanisme d'embrayage (16), pour être temporairement couplée avec le bras senseur de hauteur (12) en vue de maintenir, durant la totalité du processus de charge ou de décharge, n'importe quelle valeur de garde au sol de la plate-forme préalablement sélectionnée avec la fonction B) constamment au même niveau que le quai de charge, sans que l'état de charge du véhicule ait une influence quelconque (fonction D)

9. Module, conformément à la revendication 8, qui se **caractérise par le fait que** le mouvement vertical transmis à partir de l'essieu de roue de référence (9) vers un bout de la biellette principale (170) du bras senseur (12) est ici transformé en mouvement rotatif qui, par le biais de la rotation de l'essieu principal (153), est directement transmis au clapet principal de nivelage (11) et peut être aussi transmis vers le clapet secondaire de nivelage (18), à condition que le mécanisme d'embrayage (16) soit engagé.

10. Module, conformément à la revendication 8, qui se **caractérise par le fait que** les mécanismes de positionnement (15, 17) sont deux mécanismes axiaux de poussée qui, dépendant de la combinaison de pressions exercées sur chacune des trois chambres d'action pneumatique, peuvent agir sur le clapet secondaire de nivelage (18) afin de bloquer ce dernier, de le libérer ou de le déplacer selon la fonction qui est en cours d'exécution à ce moment-là.

11. Module, conformément à n'importe laquelle des revendications 8 à 10, qui se **caractérise par le fait que** la fonction de maintien constant de la plate-forme au niveau du quai de charge (D) est conduit par le biais de l'utilisation d'un clapet secondaire de nivelage (18) qui assume, comme hauteur de nivelage temporaire, n'importe quelle hauteur de plate-forme qui peut être sélectionnée par le biais d'une fonction manuelle de soulèvement ou d'abaissement (B) ; un clapet secondaire de nivelage (18) qui est maintenu sur sa position centrale de point mort, sans tenir compte des mouvements du bras du senseur (12) au moyen de deux dispositifs de positionnement (15, 17), afin de pouvoir déplacer avec le bras senseur de garde au sol (12) par l'action d'un mécanisme d'embrayage contrôlé pneumatiquement (16).

12. Module, conformément à n'importe laquelle des revendications 8 à 11, ) hormis le fait d'être utilisés dans la fonction D), le clapet secondaire de nivelage (18) et les mécanismes de positionnement (15, 17) interviennent aussi dans la fonction pour l'ajustage manuel de la garde au sol de la plate-forme (B), étant donné que le clapet secondaire de nivelage (18) agit comme un distributeur pneumatique pour la dite fonction B) étant conduite par les mécanismes de positionnement (15, 17), selon les signaux reçus du module de contrôle correspondant.

13. Module, conformément à la revendication 8, qui se **caractérise par le fait que** son corps (101) est un bloc de section carrée d'aluminium extrudé qui a été mécanisé pour être capable de loger les pièces qui constituent les différents mécanismes individuels et pour être capable d'établir les différents passages de communication interne entre les dits mécanismes, hormis les ports de communication avec l'extérieur.

14. Module, conformément aux revendications 8 et 13, qui se **caractérise par le fait que** les deux mécanismes de positionnement (15, 17), le clapet de limitation de garde au sol (13) et le clapet pour la sélection entre les niveleurs (19) sont logés sur une des faces de section carrée du corps (101) du module de nivelage (10) ; le clapet d'entrée à non-retour (30) et les deux clapets de vidange à non-retour (31) sont logés sur la face opposée à la précédente ; et le clapet principal (11), le clapet secondaire de nivelage (18), le mécanisme d'embrayage (16) et l'essieu principal (153) du bras senseur de garde au sol (12) sont logés sur deux faces rectangulaires opposées l'une de l'autre et perpendiculaires aux deux précédentes.

15. Module, conformément à la revendication 8, qui se **caractérise par le fait que** le clapet de limitation de garde au sol (13) et le clapet pour la sélection entre les deux niveleurs (19) sont du type distributeurs à glissière pneumatique ; avec le clapet de sélection de nivelage (19) étant pneumatiquement conduit et muni de ressort de retour ; et le clapet de limitation de garde au sol (13) étant mécaniquement contrôlée, étant conduite par le clapet principal de nivelage lui-mëme (11) et un ressort de retour.

16. Module, conformément aux revendications 8 à 12, qui se **caractérise par le fait que** l'assemblage formé par le clapet principal de nivelage (11) et le clapet secondaire de nivelage (18) constitue un double distributeur rotatif et avec une action opposante, avec deux passages communs centraux pour la fourniture et prise constitué par les paliers de distributeur (144 et 147) ; ses passages de travail étant formés par la mortaise simple, qui ne passe pas sur tout le parcours, avec deux disques de distribution opposés (148 et 154) qui ont des coupes sur leur face scellée contre les paliers de distribution (144 et 147) ci-dessus ; **par le fait que** le disque distributeur I (148) du clapet principal de nivelage (11) tourne en permanence couplée avec l'essieu principal (153) afin de mener la fonction A) et remplit aussi la fonction d'agir comme un profil de came pour conduire le clapet de limitation de garde au sol (13) ; **par le fait que** le disque distributeur II (154) du clapet secondaire de nivelage (18) sera uniquement capable de tourner avec l'essieu principal (153) lorsque le mécanisme d'embrayage (16) travaille au cours de la fonction D) et conduit aussi la fonction d'avoir deux plans de coupe en son intérieur afin d'agir comme base pour que l'opération des deux mécanismes de positionnement (15, 17) soit bloquée, conduite ou libérée, selon que la fonction A), B) ou D) soit mise en oeuvre ; **par le fait que** les trous centraux des paliers de distribution II (144) sont beaucoup plus grands que leurs équivalents dans les paliers de distribution I (147), à cause du plus grand débit d'air exigé par le clapet secondaire de nivelage (18) pour lui permettre de mener à terme les fonctions B) et D) ; et **par le fait que** chaque paire de paliers de distribution (144 et 147), selon qu'elle soit destinée à la livraison ou a une prise, a un logement commun dans le corps (101) du module de nivelage, où un ressort de retour (145) est lui aussi logé, pour exercer simultanément une pression sur la paire de paliers (144, 147) contre leurs disques respectifs (154, 148)

17. Module, ,conformément aux revendications 8 à 12, qui se **caractérise par le fait que** la connexion interne pneumatique, entre le corps (101) du module de nivelage et le mécanisme d'embrayage (16) est à travers un conduit intérieur de l'essieu principal (153).

18. Module, conformément à la revendication 8, qui se **caractérise par le fait que** les ports qui se communiquent avec le module de contrôle peuvent constituer un simple multiple connecteur de port d'action rapide sur chacun des deux modules, entre lesquels une manche simple multitube pourrait être utilisée pour obtenir des conduits indépendants d'air comprimé.
